**Europäisches Patentamt**

**European Patent Office**

**Office européen des brevets**

(11) Veröffentlichungsnummer: **0 033 299**

**A1**

(12) ## EUROPÄISCHE PATENTANMELDUNG

(21) Anmeldenummer: **81810005.9**

(51) Int. Cl.³: **G 03 B 27/58**

(22) Anmeldetag: **06.01.81**

(30) Priorität: **11.01.80 CH 213/80**

(43) Veröffentlichungstag der Anmeldung:
**05.08.81 Patentblatt 81/31**

(84) Benannte Vertragsstaaten:
**CH DE FR GB IT LI**

(71) Anmelder: **GRETAG Aktiengesellschaft**
**Althardstrasse 70**
**CH-8105 Regensdorf(CH)**

(72) Erfinder: **Bizic, Milan**
**Mühlegasse 8**
**CH-8114 Dänikon(CH)**

(74) Vertreter: **Pirner, Wilhelm et al,**
**Patentabteilung der CIBA-GEIGY AG Postfach**
**CH-4002 Basel(CH)**

(54) **Einrichtung zum abschnittsweisen Belichten von fotoempfindlichem Bahnmaterial.**

(57) Zwischen einer Vorratsrolle (71) für das Bahnmaterial (P) und einer intermittierend angetriebenen Schneidvorrichtung (51) ist ein das Bahnmaterial (P) schrittweise zur Schneidvorrichtung (51) vorschiebender Mitnehmer (26) vorgesehen. Um eine möglichst enge Längentoleranz der abgeschnittenen Bahnabschnitte zu gewährleisten, weist der Mitnehmer einen geradlinig verschiebbar geführten Läufer (26) auf, der eine eben, mit Saugöffnungen (38) versehene und flächig am Bahmaterial (P) anzugreifen bestimmte Mitnahmefläche (30) aufweist, die über eine formschlüssige Antriebsverbindung (31,32) mittels eines Schrittmotors zu einem Vorschub- und zu einem Rückhub antreibbar ist.

./...

EP 0 033 299 A1

*Fig. 1*

7-12675/-

Einrichtung zum abschnittsweisen Belichten von fotoempfindlichem
Bahnmaterial.

Die vorliegende Erfindung betrifft eine Einrichtung zum abschnittsweisen Belichten von fotoempfindlichem Bahnmaterial gemäss dem Oberbegriff des Patentanspruchs 1.

In automatischen fotografischen Kopiergeräten, sogenannten Printern,
wird das Fotopapier, auf welchem die Kopien gemacht werden sollen,
für gewöhnlich in Form von zu Rollen aufgewickelten Bahnen vorrätig
gehalten. Von diesen Vorratsrollen wird das Fotopapier mittels eines
motorischen Antriebs abgezogen und intermittierend in dem gewählten
Papierformat entsprechenden Schritten der Belichtungsbühne zugeführt.
Das belichtete Fotopapier wird für die weitere Verarbeitung entweder
wieder zu einer Rolle aufgewickelt oder aber es wird der belichtete
Papierabschnitt sofort nach jedem Belichtungsvorgang von der Bahn
abgetrennt, und die so anfallenden Einzelblätter werden dann jeweils
einzeln der weiteren Verarbeitung zugeführt. Die vorliegende Erfindung befasst sich mit einem Kopiergerät der letztgenannten Art,
bei welchem also die Papierbahn noch innerhalb desselben in Einzelblätter zerschnitten wird.

Bei einem Einzelblattprinter muss der Vorschub der Papierbahn mit
höchster Präzision erfolgen. Insbesondere gilt dies, wenn sogenannte
Randloskopien hergestellt werden sollen, wobei die einzelnen Bildfelder auf dem Fotopapier unmittelbar aneinander anschliessen und
nicht durch einen unbelichteten Steg getrennt sind. Hier machen sich bereits kleinste Toleranzen der Vorschublänge sehr störend bemerkbar.

Der bei den das Fotopapier nicht in Einzelblätter zerschneidenden Kopiergeräten übliche Vorschub der Papierbahn über Transportwalzen oder -rollen ist für Einzelblattprinter erfahrungsgemäss nicht geeignet. Mitverantwortlich dafür dürfte u.a. auch die Tatsache sein, dass von einer Rolle abgezogenes Bahnmaterial, insbesondere wenn es sich dabei um vergleichsweise schweres Fotopapier handelt, dazu neigt, nach dem Abzug von der Rolle seine Krümmung beizubehalten. Bei kontinuierlich arbeitenden Printern spielt dieser Umstand keine nennenswerte Rolle, da dort die kontinuierliche Papierbahn vor und hinter der Belichtungsbühne ausreichend geführt werden kann. Bei Einzelblattprintern ist dies jedoch nicht möglich, da dort die Papierbahn unmittelbar am Rand der Belichtungsbühne endet.

Durch die vorliegende Erfindung sollen nun diese Schwierigkeiten in den Griff bekommen werden. Insbesondere soll durch die Erfindung eine Einrichtung der eingangs definierten Art derart verbessert werden, dass sie einen exakten Vorschub des Kopierpapiers gewährleistet. Ferner soll auch eine einfache und genaue Einstellung und Verstellung des Belichtungsformats erreicht werden.

Die diesen Anforderungen gerecht werdende Einrichtung ist durch die im kennzeichnenden Teil des Patentanspruchs 1 angeführten Merkmale gekennzeichnet. Weitere Merkmale bevorzugter Ausführungsformen sind den abhängigen Ansprüchen zu entnehmen.

Bei der erfindungsgemässen Kopiereinrichtung wird das Kopierpapier somit mittels eines hin- und hergehenden Vakumschlittens, wie er dem Prinzip nach z.B. aus der CH-A 3 25 428 bekannt ist, vorgeschoben. Ein ähnlicher Antrieb ist auch schon bei einer Reprokamera bekannt (vgl. z.B. DE-A 22 39 884), wo beim Papierwechsel ein von zwei Laufketten getriebener Saugkopf den Papieranfang von einem Abgabewalzenspalt über die Belichtungsbühne hinweg zu einem Aufnahme-

- 3 -

walzenspalt leitet. Der Saugkopf ist jedoch nur während des Wechsels des Fotopapiers aktiv, während des eigentlichen Kopierbetriebs erfolgt der Antrieb bzw. Vorschub des Kopierpapiers in üblicher Weise mittels Transportwalzen.

Im folgenden wird ein Ausführungsbeispiel der Erfindung rein beispielsweise anhand der Zeichnung näher beschrieben. Es zeigen:

Fig. 1   einen Längsschnitt etwa längs der Schnittebene I - I der Fig. 2 durch das Ausführungsbeispiel der erfindungsgemässen Einrichtung,

Fig. 2   einen Querschnitt etwa entlang der Schnittebene II - II der Fig. 1,

Fig. 3   ein Detail aus Fig. 1 in Draufsicht in Richtung des Pfeiles III in Fig. 1 und

Fig. 4   in sehr schematisierter Darstellung die Einrichtung der Fig. 1 mit einigen Antriebs- und Steuerorganen.

Die dargestellte Einrichtung 10 ist vollständig in einem Dunkelraum bzw. lichtdichten Gehäuse angeordnet und weist eine Grundplatte 11 auf, auf welcher zwei Führungssäulen 12, 13 fest verankert sind. Auf den Säulen 12, 13 ist ein gesamthaft mit 14 bezeichnetes Gestell geführt verschiebbar gelagert, und zwar über zwei am Boden 17 des Gestelles 14 befestigte und die Säule 12 umgreifende Büchsen 15, 16, sowie über eine seitlich vom Boden 17 abstehende Rolle 18, die auf der Säule 13 aufliegt und mittels eines die Säule 13 untergreifenden Winkelstückes 19 am Abheben von der Säule 13 gehindert ist.

Das Gestell 14 weist ferner zwei jeweils an den Enden des Bodens 17 befestigte Stirnplatten 20, 21 auf, die oberends durch zwei parallel zueinander verlaufende Tischelemente 22, 23 sowie durch zwei unter sich und zu den Säulen 12, 13 parallele Führungssäulen 24, 25 verbunden sind. Zwischen den Tischelementen 22, 23 als seitliche Führung ist ein rechteckiger Läufer 26 mittels Rollen 27 längs den Führungssäulen 24, 25 verschiebbar geführt angeordnet.

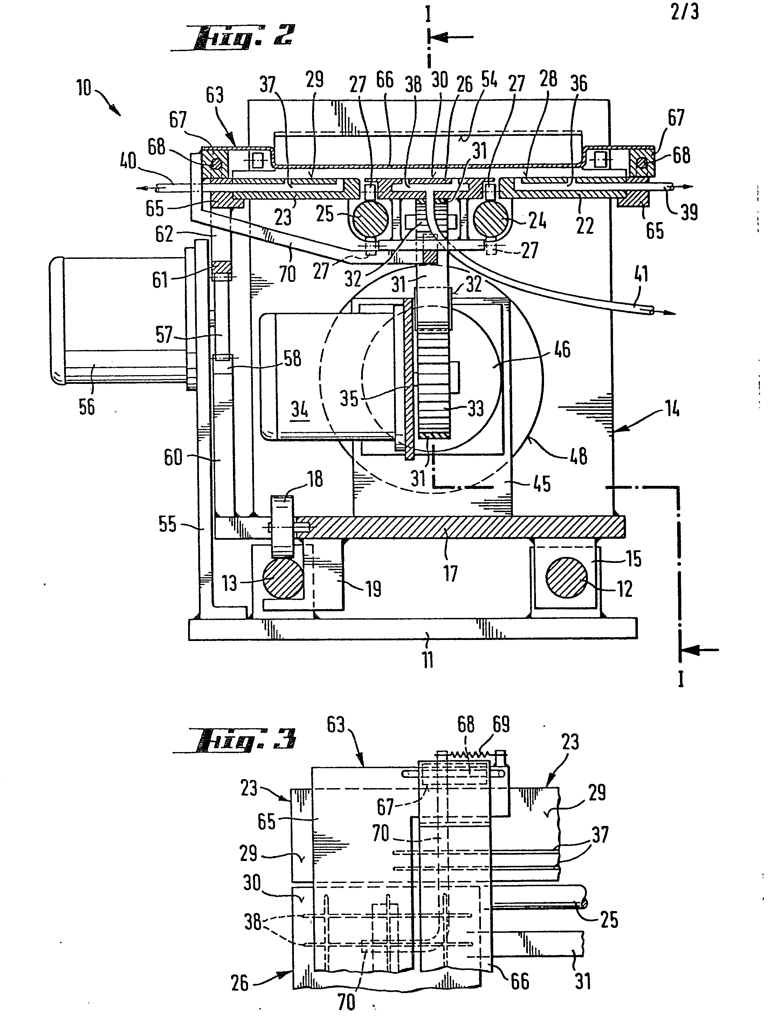

Der eine mit den Auflageflächen 28, 29 der Tischelemente 22, 23 koplanare Mitnahmefläche 30 aufweisende Läufer 26 ist über nicht dargestellte Mittel fest mit einem endlosen Zahnriemen 31 verbunden, der über gestellfeste Umlenkrollen 32 geführt und mit dem Abtriebsritzel 33 eines ersten Schrittmotors 34 (Fig. 2) kämmt, der seinerseits an einer lotrechten und rechtwinklig von der Stirnplatte 21 nach innen abstehenden Tragplatte 35 angeflanscht ist.

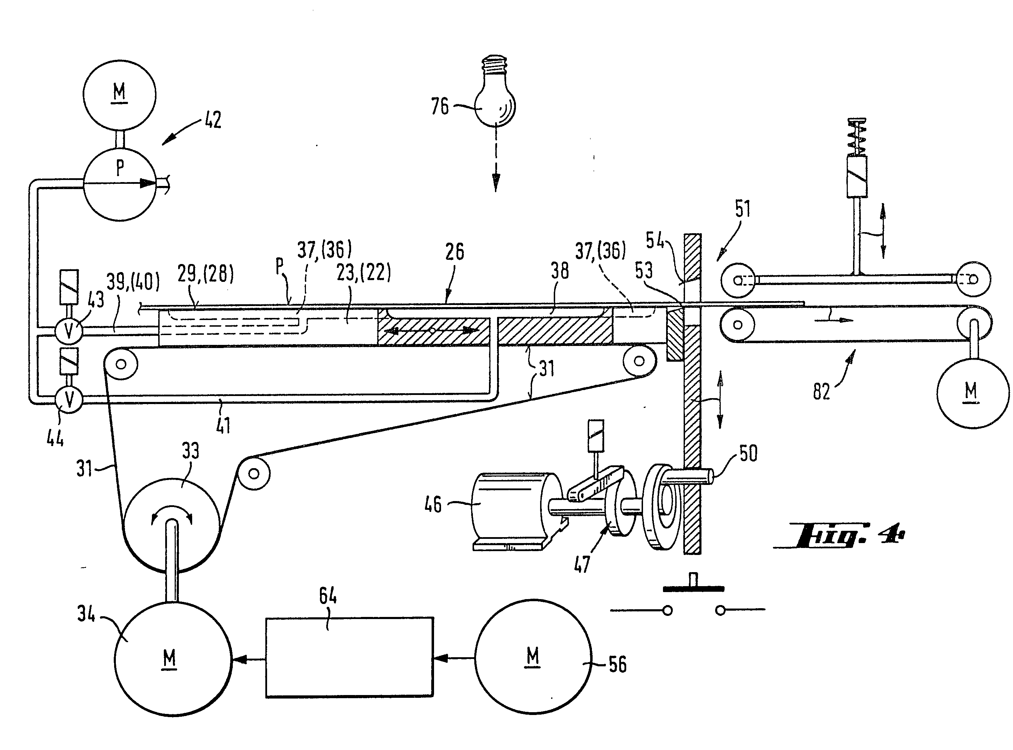

Sowohl die Auflageflächen 28, 29 der Tischelemente 22, 23 als auch die Mitnahmefläche 30 des Läufers 26 sind von einer Mehrzahl von Säugöffnungen bzw. Saugkanälen 36, 37 bzw. 38 durchsetzt, welche je an eine Saugleitung 39, 40 bzw. 41 angeschlossen sind, die zu einer gemeinsamen Saugpumpe 42 (Fig. 4), jedoch über gesondert gesteuerte Ventile 43 bzw. 44 führen.

An einer am Boden 17 verankerten, zur Stirnwand 20 parallelen Tragplatte 45 ist ein Motor 46 angeflanscht, der über eine Eintourenkupplung 47 eine Kurvenscheibe 48 mit einer in achsialer Richtung offenen exzentrischen Ringnut 49 antreibt. In die Ringnut 49 greift ein Folgeglied 50, das am beweglichen Teil 52 einer Schneidvorrichtung 51 befestigt ist, deren fester Teil durch ein an der Stirnwand 20 befestigtes Messer 53 gebildet ist. Der bewegliche Teil 52 der Schneidvorrichtung besitzt ein in der Art eines Portals bzw. einer Guillotine das feste Messer 53 überspannendes Messer 54 auf. Wenn somit bei eingeschaltetem Motor 46 die Eintourenkupplung 47 impulsartig entriegelt wird, wird die Kurvenscheibe 48 eine Umdrehung und daher die Schneidvorrichtung 51 einen vollständigen Schnitthub ausführen.

- 5 -

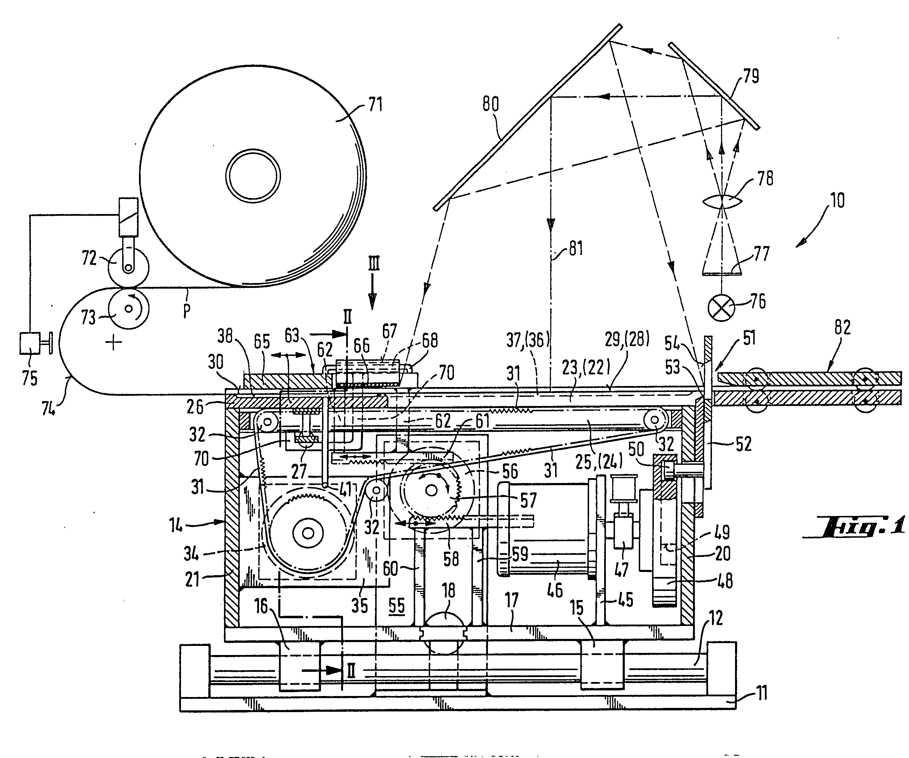

An einer am Boden 11 verankerten, lotrecht nach oben abstehenden und parallel zu den Säulen 12, 13 verlaufenden Tragplatte 55 ist ein weiterer Schrittmotor 56 angeflanscht. Dessen Abtriebsritzel 57 kämmt mit einer ersten Zahnstange 58, die über zwei Stützen 59, 60 fest am Boden 17 des Gestells 14 verankert ist. Das Abtriebsritzel 57 kämmt auch an seiner diametral gegenüberliegenden Stelle mit einer zweiten Zahnstange 61, die über zwei Stützen 62 fest an einem Maskenträger 63 verankert ist. Dreht sich somit der Schrittmotor 56 in Fig. 1 im Uhrzeigersinn, wird das Gestell 14 mit allen darin angeordneten Bestandteilen nach links, der Maskenträger 63 dagegen um den gleichen Weg nach rechts verschoben.

Die Verdrehungslage des Schrittmotors 56 wird - wie der Fig. 4 zu entnehmen ist - von einem Rechner 64 erfasst, bzw. diesem eingegeben. Der Rechner 64 errechnet sodann selbsttätig die vom Schrittmotor 34 für einen Vorschub- und Rückhub auszuführenden Schritte und steuert dementsprechend diesen Schrittmotor 34 an. Daraus ergibt sich, dass durch Verstellen des Schrittmotors 56 ein Formatwechsel möglich ist.

Wie der Fig. 3 zu entnehmen ist, weist der Maskenträger 63 einen fest mit der Zahnstange 61 verblockten U-förmigen Bügel 65 auf, der verschiebbar an den freien Längsseiten der Tischelemente 22, 23 geführt ist. Die offene Seite des Bügels 65 ist durch ein als eigentliche Maske dienendes Blechband 66 überspannt, das mit seinen Enden an einer Hülse 67 befestigt ist, die beschränkt verschiebbar auf einem am Bügel 65 verankerten Zapfen 68 gelagert ist. Eine einerends am Bügel 65, andernends an der Hülse 67 eingehängte Zugfeder 69 hat das Bestreben, das Blechband 66 in Fig. 3 nach rechts, also in Vorschubrichtung des Läufers 26 zu drücken. An der Hülse 67 ist jedoch auch ein Anschlagfinger 70 befestigt, der, unter dem Tischelement 23 hindurchgreifend, sich in die Bewegungsbahn des Läufers 26 erstreckt und mit dessen in Vorschubrichtung gesehen nachlaufenden Stirnkante zusammenwirkt.

Am Ende jedes Rückhubes positioniert somit der Läufer 26 die schon
über den Bügel 65 grob positionierte Maske 66 genauer und nach Massgabe der Genauigkeit des Schrittmotors 34.

Das Fotopapier P befindet sich auf einer Vorratsrolle 71, von welcher
es mittels eines angetriebenen, in und ausser Wirkstellung bringbaren
Abzugswalzenpaares 72, 73 abziehbar ist. Das Fotopapier P wird zuerst
zu einer entgegengesetzt gekrümmten Schleife 74 geformt, deren Grösse
durch einen die Abzugswalzen 72, 73 steuernden Grenzschalter 75
erfasst wird. Von der Vorratsschleife gelangt das Papier unter der
Maske 65 hindurch auf den durch die Auflageflächen 28, 29 sowie
die Mitnahmefläche 30 gebildeten Belichtungstisch. Dieser wird vom
gefalteten Strahlenbündel einer mit einer Lichtquelle 76, einem
Halter 77 für die Kopiervorlagen, einem Projektionsobjektiv 78 und
zwei Spiegeln 79, 80 versehenen Vergrösserungsoptik beaufschlagt.

Durch die gegenläufige Verschiebbarkeit des Gestelles 14 einerseits
und des Maskenträgers 63 andererseits ist die auf dem Belichtungstisch 28, 29, 30 dargebotene freie Fläche des Fotopapiers P stets
auf die optische Achse 81 der Vergrösserungsoptik eingemittet.

Der Funktionsablauf der dargestellten Kopiereinrichtung ist etwa
der folgende.

Es sei von der Stellung gemäss Fig. 1 ausgegangen. Die Ventile 43,
44 sind offen, d.h. die mit ihrer vorlaufenden Kante bis zur Schneide
des Messers 53 reichende Papierbahn P wird durch die von den
Sauföffnungen 36, 37 und 38 ausgehende Saugwirkung fest auf dem
Belichtungstisch 28, 29, 30 festgehalten. Die Maske 66 ist durch
den am hinteren Totpunkt verharrenden Läufer 26 genau positioniert.
Nun erfolgt die Projektion des im Filhalter 77 festgehaltenen Negativs
über die Vergrösserungsoptik auf den zwischen Maske 66 und Messer 53
befindlichen Abschnitt des Papiers (Belichtung). Nach Abschluss der
Belichtung wird das Ventil 43 geschlossen. Die Auflageflächen 28, 29 geben somit die Papierbahn P frei, die aber immer noch auf der Mitnahmefläche 30 des Läufers 26 haftet. Nun wird der Schrittmotor
34 eingeschaltet, und zwar zur Ausführung so vieler Schritte (in
Fig. 1 im Uhrzeigersinn), wie der Rechner 64 nach Massgabe der
Stellung des Schrittmotors 56 ermittelt hat. Dadurch wird die Papierbahn P soweit in Richtung Schneidvorrichtung vorgeschoben, bis die
imaginäre Linie, die bei der Belichtung unmittelbar unter der Seitenkante der Maske 66 gelegen hat, genau über die Schneide des Messers
53 zu liegen kommt. Nun wird das Ventil 43 wieder geöffnet und -
bei laufendem Motor 46 - die Eintourenkupplung 47 zur Ausführung
einer Umdrehung freigegeben, was einen Schnittschub der Schneidvorrichtung 51 zur Folge hat.
Sodann wird (bei immer noch offenem Ventil 43) das Ventil 44 geschlossen, so dass der Läufer 26 die auf den Auflageflächen 28, 29
festgehaltene Papierbahn freigibt. Der abgeschnittene Papierabschnitt
wird von einem unmittelbar auf die Schneidvorrichtung 51 folgenden
Wegförderer 81 erfasst und wegtransportiert. Nun wird der Schrittmotor 34 zur Ausführung gleich vieler Schritte, jedoch im Gegenuhrzeigersinn eingeschaltet, was den Läufer 26 wieder in die in
Fig. 1 gezeigte Ausgangslage zurückbringt (Rückhub). Sodann wird bei
immer noch offenem Ventil 43 das Ventil 44 ebenfalls wieder geöffnet,
wonach eine erneute Belichtung erfolgen kann.

Patentansprüche

1. Einrichtung zum abschnittweisen Belichten von fotoempfindlichem Bahnmaterial (P), insbesondere von Fotopapier, mit einem zwischen einer Vorratsrolle (71) des Bahnmaterials und einer intermittierend angetriebenen Schneidvorrichtung (51) angeordneten und zur Aufnahme des zu belichtenden Bahnmaterials bestimmten Belichtungstisch (22,23,26) und mit einer Belichtungsoptik (76-80) zur Projektion einer Kopiervorlage auf das am Belichtungstisch befindliche Bahnmaterial, dadurch gekennzeichnet, dass der Belichtungstisch (22,23,26) mit einem das Bahnmaterial (P) schrittweise zur Schneidvorrichtung (51) vorschiebenden Mitnehmer (26) versehen ist, dass der Mitnehmer einen geradlinig verschiebbar geführten Läufer (26) mit einer ebenen, mit Saugöffnungen (38) versehenen und flächig am Bahnmaterial anzugreifen bestimmten Mitnahmefläche (30) aufweist und über eine formschlüssige Antriebsverbindung (31,33) mittels eines Schrittmotors (34) zu einem Vorschub- und zu einem Rückhub antreibbar ist.

2. Einrichtung nach Patentanspruch 1, dadurch gekennzeichnet, dass der rechteckige Läufer (26) zu beiden Seiten seines Hubweges von ebenfalls mit Saugöffnungen (36,37) versehenen und mit der Mitnamefläche (30) koplanaren Auflageflächen (28,29) flankiert ist.

3. Einrichtung nach Patentanspruch 1, dadurch gekennzeichnet, dass der Läufer von einem mit einem Antriebsritzel (33) des Schrittmotors (34) kämmenden Zahnriemen (31) angetrieben ist.

4. Einrichtung nach Patentanspruch 1, dadurch gekennzeichnet, dass der Läufer (26) mit dem Schrittmotor (34) und die Schneidvorrichtung (51) an einem in Verschieberichtung des Läufers (26) geführt verschiebbaren Gestell (14) befestigt sind.

5. Einrichtung nach Patentanspruch 4, dadurch gekennzeichnet, dass das Gestell (14) über eine formschlüssige Antriebsverbindung (57,58) an einen weiteren, ortsfest angeordneten Schrittmotor (56) gekoppelt ist, wobei Mittel (64), beispielsweise ein Rechner, vorgesehen sind, um die Schrittzahl für den Vorschub- und den Rückhub des erstgenannten Schrittmotors (34) nach Massgabe der Verdrehungslage des weiteren Schrittmotors (56) zu verändern.

6. Einrichtung nach Patentanspruch 5, dadurch gekennzeichnet, dass der weitere, ortsfest angeordnete Schrittmotor (56) über ein Ritzel (57) und einer erste Zahnstange (58) an das Gestell (14) gekoppelt ist, wobei die Zahnstange (58) am Gestell (14) befestigt ist.

7. Einrichtung nach Patentanspruch 6, dadurch gekennzeichnet, dass an dem der Schneidvorrichtung (51) abgekehrten Ende des Belichtungstisches (22,23,26) eine das Fotopapier (P) überspannende Maske (66) vorgesehen ist, die mittels einer zweiten, zur ersten Zahnstange (58) gegenläufigen Zahnstange (61) mit dem weiteren, ortsfest angeordneten Schrittmotor (56) antriebsverbunden ist.

8. Einrichtung nach Patentanspruch 7, dadurch gekennzeichnet, dass die Maske (66) in Hubrichtung des Mitnehmers (26) beschränkt verschiebbar an einem mit der zweiten Zahnstange (61) starr verbundenen Maskenträger (63) gelagert ist und mittels einer Feder (69) in Vorschubrichtung des Mitnehmers vorgespannt ist, wobei die Maske (66) mit einem mit dem Mitnehmer (26) zusammenwirkenden Anschlag (70) versehen ist, der die Maske (66) nach jedem Rückhub des Mitnehmers (26) gegen die Wirkung der Feder (69) positioniert.

9. Einrichtung nach den Patentansprüchen 2 und 4, dadurch gekennzeichnet, dass die Auflageflächen (28,29) fest am Gestell (14) montiert sind.

10. Einrichtung nach Patentanspruch 2, dadurch gekennzeichnet, dass die Saugöffnungen (36,37,38) der Mitnahmefläche (30) und jene der Auflageflächen (28,29) je über gesondert gesteuerte Ventile (43, 44) an eine Saugquelle (42), z.B. eine Vakuumpumpe, angeschlossen sind.

Fig. 1

0033299

1/3

Fig. 2

Fig. 3

Fig. 4

**0033299**

Europäisches Patentamt

**EUROPÄISCHER RECHERCHENBERICHT**

Nummer der Anmeldung

**EP 81 81 0005**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - A - 2 239 884</u> (LOGETRONICS INC.)  <br> * Seiten 8-20; Figuren 4-8 *  <br> -- | 1,3,7, 8,10 |
| D | <u>CH - A - 325 428</u> (ZIMMER'S ERBEN K.G.)  <br> * Seite 1, Zeilen 42-62; Seite 2, Zeilen 1-52; Figuren 1-5 *  <br> -- | 1,10 |
| | <u>FR - A - 1 341 418</u> (AGFA A.G.)  <br> * Seite 5, Zeilen 7-14; Figur 4 *  <br> ---- | 7 |

**KLASSIFIKATION DER ANMELDUNG (Int. Cl.³)**

G 03 B 27/58

**RECHERCHIERTE SACHGEBIETE (Int. Cl.³)**

G 03 B 27/58
G 03 D 15/04
G 03 G 15/00
B 65 H 17/28
        17/36
        35/04
        35/06

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-04-1981 | BOEYKENS |

EPA form 1503.1  06.78